**Europäisches Patentamt**

**European Patent Office**

**Office européen des brevets**

(19)

(11)  **EP 1 416 295 A1**

(12)  # DEMANDE DE BREVET EUROPEEN

(43)  Date de publication:
**06.05.2004   Bulletin 2004/19**

(51)  Int Cl.⁷: **G01T 1/178**, G01T 1/02

(21)  Numéro de dépôt: **02360302.0**

(22)  Date de dépôt: **29.10.2002**

(84)  Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(71)  Demandeurs:
- **Université Louis Pasteur,
(Etablissement public à caractère scientifique, culturel et professionnel)
F-67000 Strasbourg (FR)**
- **CENTRE NATIONAL DE
LA RECHERCHE SCIENTIFIQUE (CNRS)
Etablissement Public
75016 Paris (FR)**

(72)  Inventeurs:
- **Husson, Daniel René
67000 Strasbourg (FR)**
- **Nourredine, Abdelmjid
67000 Strasbourg (FR)**

(74)  Mandataire: **Nuss, Pierre et al
Cabinet Nuss
10, rue Jacques Kablé
67080 Strasbourg Cédex (FR)**

(54)  **Dispositif de mesure électronique du type dosimètre pour la mesure de la teneur en un composé radioactif de l'air**

(57)   La présente invention a pour objet un dispositif de mesure électronique du type dosimètre pour déterminer la teneur en un composé radioactif de l'air.

Ce dosimètre est constitué par un boîtier comprenant, d'une part, une chambre de collecte hermétique pourvue d'une anode et d'une cathode et, d'autre part, un compartiment technique renfermant les moyens de détection, de traitement du signal de détection et d'alimentation, dosimètre caractérisé en ce que la chambre de collecte (2) et le compartiment technique (6) sont séparés par une paroi isolante (7) comportant une fenêtre dans laquelle est monté un moyen calibré de filtrage sélectif (9) des particules alpha générées par le composé radioactif contenu dans le volume de gaz à analyser présent dans la chambre de collecte (2), comportant au moins deux plages de sélection, associé, du côté chambre de collecte (2), à un dispositif de cathode (4) et coopérant, du côté compartiment technique (6), avec des moyens de détection, de traitement et de discrimination et de comptage différencié d'au moins deux types de particules alpha.

Fig.1

## Description

La présente invention concerne le domaine de la protection des êtres vivants contre les radiations, en particulier contre les effets des composés radioactifs contenus dans l'air, et a pour objet un dispositif de mesure électronique du type dosimètre pour déterminer la teneur d'un composé radioactif dans l'air ou dans un mélange de gaz.

La présente invention trouvera plus particulièrement une application dans la détermination des teneurs en radon de l'air en divers endroits susceptibles d'accueillir des êtres vivants, en particulier des êtres humains.

Pour mesurer l'activité volumique du radon dans l'atmosphère, trois techniques sont généralement utilisées selon les caractéristiques du prélèvement de l'air :

    i) mesure intégrée ou passive
    ii) mesure ponctuelle
    iii) mesure en continu

Les dispositifs existants de la première famille (les passifs) sont les Détecteurs Solides de Traces Nucléaires (DSTN) développables et les Détecteurs à Electret (plastiques conducteurs) pour des analyses en différé. Ils intègrent la dose de quelques semaines à plusieurs mois et n'offrent donc pas de suivi opérationnel, heure par heure. Les DSTN nécessitent une préparation complexe et toute une procédure de développement ainsi qu'une lecture microscopique fastidieuse.

Les dispositifs électroniques disponibles sur le marché reposent sur une chambre d'ionisation à très haute tension (750 V), ce qui n'est pas sans danger. De plus, la chambre nécessite de lourdes batteries ou une alimentation électrique sur site, ce qui limite sérieusement l'autonomie de l'ensemble et sa facilité de mise en oeuvre.

Par ailleurs, la technique de collection/détection en chambre cylindrique ne peut pas assurer une efficacité de collection de 100%, et la technique de traitement de signal ne permet pas de vérifier la condition d'équilibre séculaire.

Enfin, le coût unitaire de ces dispositifs électroniques connus est rédhibitoire pour un particulier et même pour une collectivité locale ou un organisme public ou privé.

Des dispositifs électroniques de laboratoire connus utilisent la collection électrostatique sur une diode PIN (avec mesure de l'énergie des particules alpha). Cependant, la taille des diodes commerciales normales ne permet pas d'optimiser la valeur du champ électrique de collection, d'où un problème de haute tension.

La présente invention a pour but de pallier la plupart des inconvénients précités et notamment de proposer un dosimètre compact et précis, dont la mesure est fiable et peut être immédiatement contrôlée et pouvant être rendu totalement autonome et portable.

A cet effet, la présente invention a pour objet un dispositif de mesure du type dosimètre électronique pour la mesure de la teneur en un composé radioactif de l'air, d'un mélange de gaz ou analogue, en particulier en radon, dosimètre essentiellement constitué par un boîtier comprenant, d'une part, une chambre de collecte hermétique pourvue d'une anode et d'une cathode et munie de moyens d'introduction et d'évacuation du gaz ou mélange de gaz à analyser et, d'autre part, un compartiment technique renfermant les moyens de détection, de traitement du signal de détection et d'alimentation, dosimètre caractérisé en ce que la chambre de collecte et le compartiment technique sont séparés par une paroi isolante comportant une fenêtre dans laquelle est monté un moyen calibré de filtrage sélectif des particules alpha générés par le composé radioactif contenu dans le volume de gaz à analyser présent dans la chambre de collecte, comportant au moins deux plages de sélection, associé, du côté chambre de collecte, à un dispositif de cathode et coopérant, du côté compartiment technique, avec une structure de détection partitionnée associée à au moins deux circuits de traitement et de discrimination des signaux de détection et à des moyens de comptage différencié d'au moins deux types de particules alpha.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

    La figure 1 est une représentation schématique en perspective et partiellement par transparence d'un dosimètre selon l'invention ;
    La figure 2 est une vue en perspective et à une échelle différente d'une partie d'un sélecteur faisant partie du dosimètre représentée sur la figure 1 ;
    La figure 3 est une vue en perspective et à une échelle différente des deux zones fonctionnelles d'absorption sélective du sélecteur représenté sur la figure 2 ;
    La figure 4 est une vue en coupe du sélecteur faisant partie du dosimètre représentée sur la figure 2 et montrant les angles limites de détection pour les deux types de particules alpha filtrés ;
    La figure 5 est une représentation symbolique d'une chaîne [matrice de détection / voie ou circuit de traitement et de discrimination /moyen de comptage] faisant partie du dosimètre selon l'invention ;
    La figure 6 est une vue partielle en perspective similaire à celle de la figure 2 d'une partie d'un sélecteur selon une variante de réalisation de l'invention ;
    La figure 7 est une vue en coupe du sélecteur représenté sur la figure 6 et montrant les angles limites de détection pour les deux types de particules alpha filtrés, et,
    La figure 8 est une représentation symbolique, similaire à celle de la figure 5, d'une chaîne fonctionnelle [matrice de détection / voie ou circuit de traitement et de discrimination / moyen de comptage] faisant partie du dosimètre selon une variante de réalisation de l'invention.

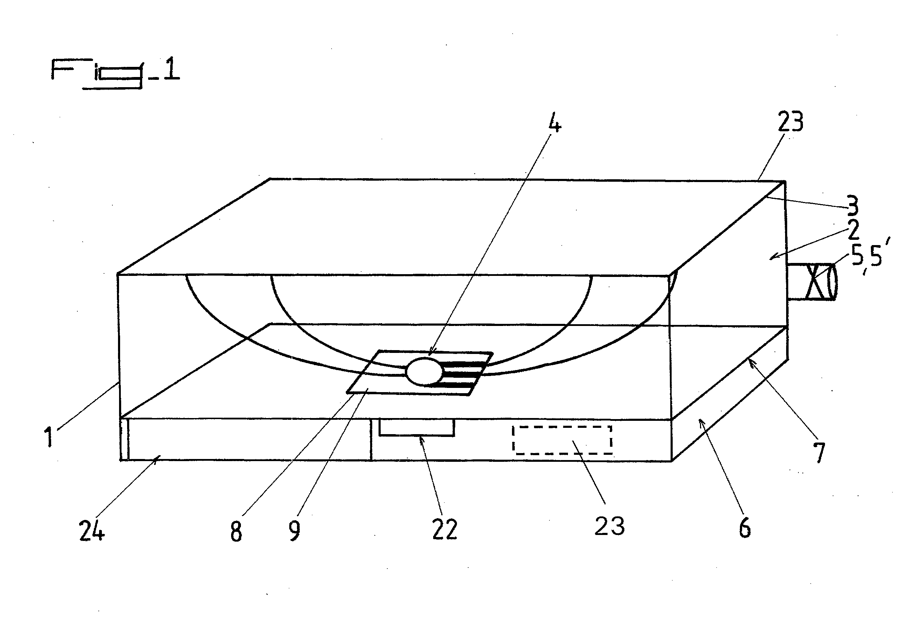

Comme le montre notamment la figure 1 des dessins annexés, le dispositif de mesure portable du type dosimètre est essentiellement constitué par un boîtier 1 comprenant, d'une part, une chambre de collecte 2 hermétique pourvue d'une anode 3 et d'une cathode 4 et munie de moyens 5, 5' d'introduction et d'évacuation du gaz ou mélange de gaz à analyser et, d'autre part, un compartiment technique 6 renfermant les moyens 10 à 12 de détection, de traitement du signal de détection et d'alimentation.

Conformément à l'invention, la chambre de collecte 2 et le compartiment technique 6 sont séparés par une paroi isolante 7 comportant une fenêtre 8 dans laquelle est monté un moyen calibré de filtrage sélectif 9 des particules alpha générés par le composé radioactif contenu dans le volume de gaz à analyser présent dans la chambre de collecte 2, comportant au moins deux plages de sélection, associé, du côté chambre de collecte 2, à un dispositif de cathode 4 et coopérant, du côté compartiment technique 6, avec une structure de détection 10 partitionnée associée à au moins deux voies ou circuits 11 de traitement et de discrimination des signaux de détection et à des moyens 12 de comptage différencié d'au moins deux types de particules alpha.

Selon une caractéristique de l'invention, permettant d'aboutir à une détection fiable et précise tout en limitant la complexité des circuits électroniques intervenant dans cette fonction, le moyen calibré de filtrage sélectif 9 réalise une absorption sélective de deux types de particules alpha et consiste en un sélecteur de particules alpha sous la forme d'une plaquette ou d'une portion de feuille sur laquelle sont définies deux zones 9' et 9'' d'épaisseurs calibrées différentes, de même surface, ajustées pour filtrer les énergies de deux types de particules alpha, préférentiellement deux types liés quantitativement par une relation de proportionnalité ou analogue, et situées en regard de la structure de détection 10 sous-jacente audit sélecteur 9.

Le choix de tels types précis de particules alpha permet de vérifier en temps réel la validité de la mesure effectuée et fournie par le dosimètre.

Préférentiellement, le matériau formant le sélecteur 9 de particules alpha est choisi dans le groupe formé par les matériaux semi-conducteurs, en particulier le silicium et les matériaux polymères, en particulier le MYLAR (nom déposé).

Pour des raisons pratiques, on préférera le silicium sur isolant, ou SOI, qui autorise la réalisation de membranes très fines (par exemple d'environ 3 μm).

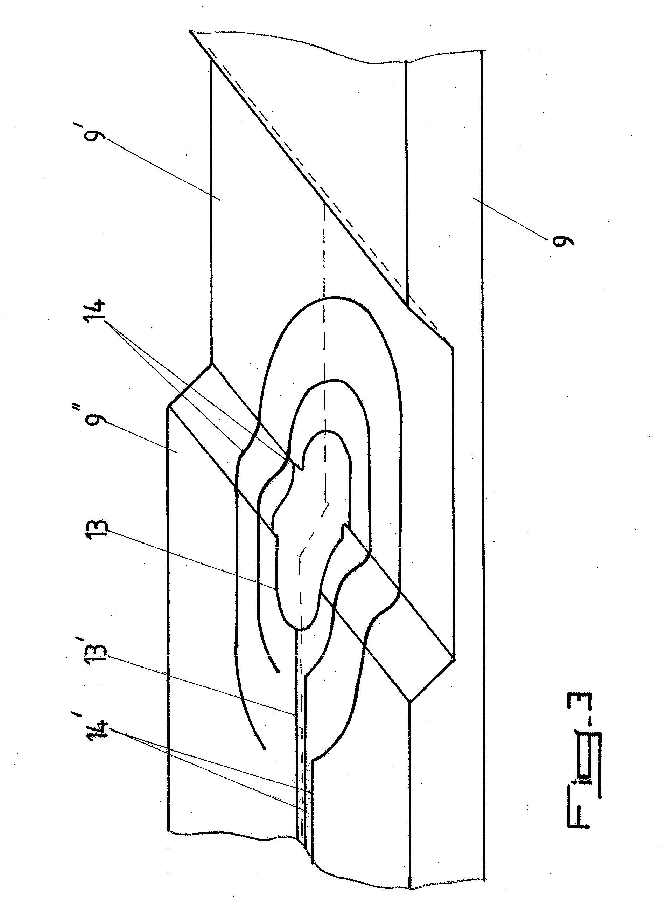

Afin de pouvoir aboutir à un champ électrostatique intense dans la chambre 2 et réaliser ainsi une collecte optimisée des particules alpha générées, tout en conservant une structure peu encombrante et sans nécessiter l'établissement d'une différence de potentiel importante, le dispositif de cathode 4 comprend une cathode de collection de très faible taille sous la forme d'une micro-cathode 13 entourée d'une ou de plusieurs structures de garde 14, 14'. Ce dispositif de cathode 4 est rapporté directement sur le moyen calibré de filtrage sélectif 9, l'anode 3 (à structure plate) étant rapportée sur la face intérieure de la paroi du boîtier 1 opposée à la paroi de séparation 7 isolante, cette dernière étant étanche au rayonnement alpha et montée hermétiquement dans ledit boîtier 1 et ladite anode 3 étant située à faible distance (par exemple environ 4 à 5 cm) de ladite micro-cathode 13 (voir notamment figures 1, 2, 3 et 6).

Selon une forme de réalisation avantageuse de l'invention, la micro-cathode 13 présente une forme circulaire et est rapportée, préférentiellement par dépôt de matériau conducteur par l'intermédiaire d'une technique de micro-lithographie, directement sur la face correspondante, rendue isolante, de la plaquette ou portion de feuille formant sélecteur 9 et symétriquement à cheval sur les deux zones 9' et 9'' d'épaisseurs calibrées différentes coopérant avec la structure de détection 10, les structures de garde consistant en au moins deux pistes annulaires 14 entourant concentriquement ladite micro-cathode 13 et en leurs pistes d'alimentation 14' entourant la piste d'alimentation 13' de ladite micro-cathode 13.

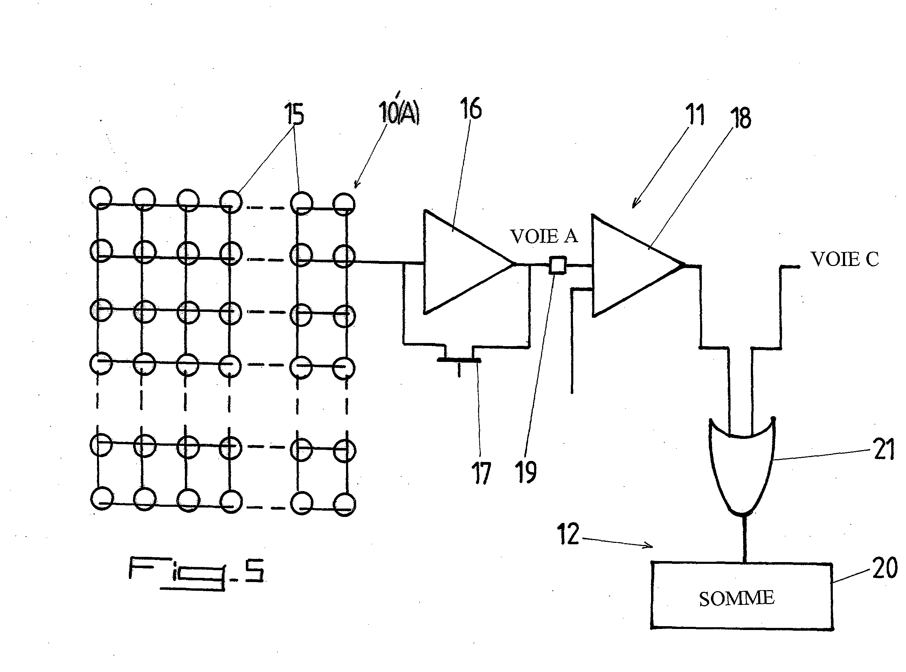

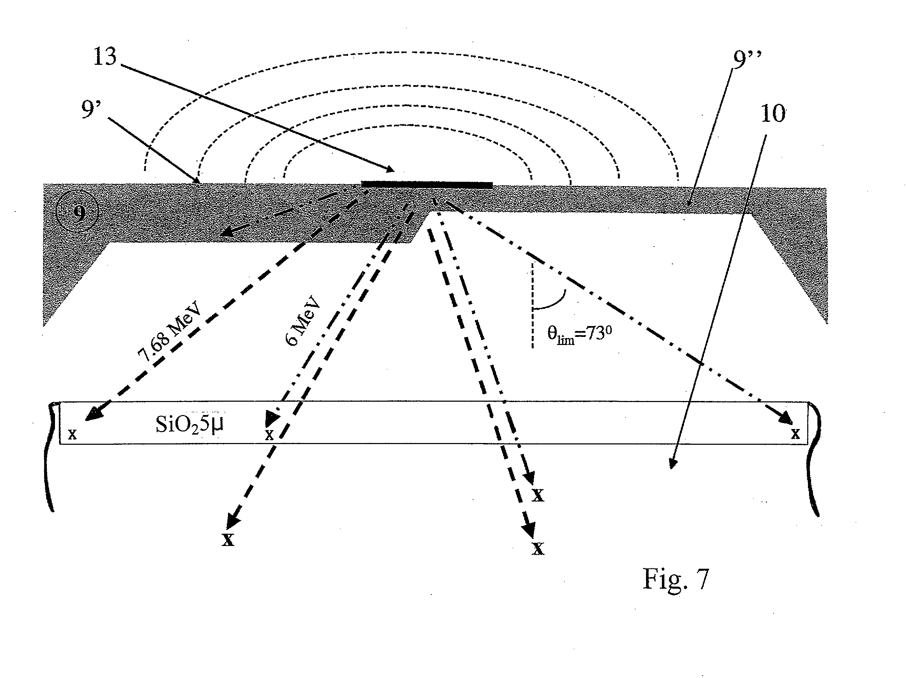

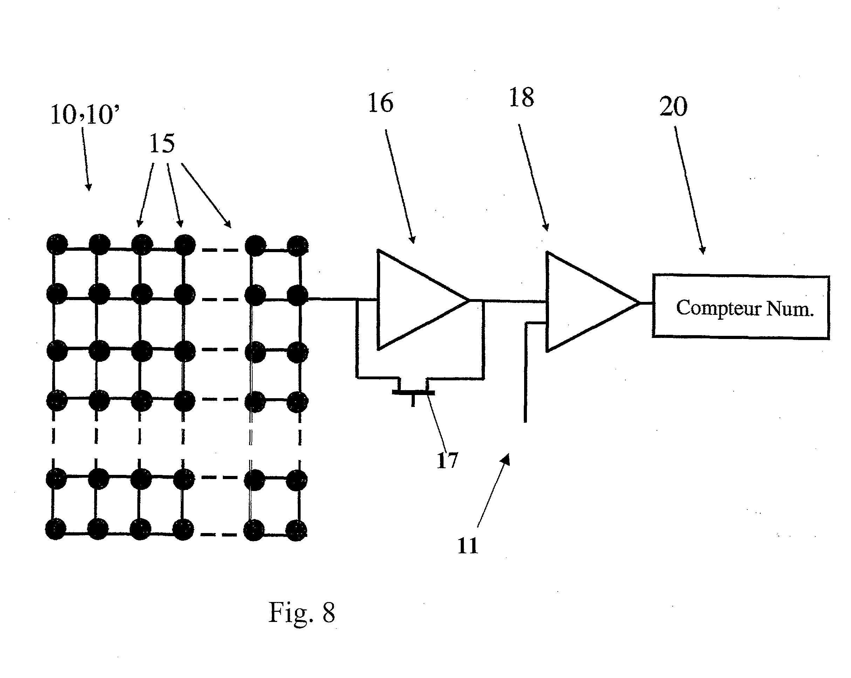

Comme le montrent les figures 1, 2 et 4 à 8 des dessins annexés et selon un mode de réalisation avantageux de l'invention, la structure de détection 10 consiste en au moins deux matrices 10' de micro-diodes 15 s'étendant chacune sous l'une des deux zones d'absorption sélective 9' et 9'', ou sous une partie de l'une de ces dernières, lesdites micro-diodes 15 étant disposées selon un motif régulier et chaque matrice 10' étant reliée à une voie de circuit analogique 11 de discrimination et de traitement des signaux de détection fournis par ses micro-diodes 15 constitutives.

Un tel choix de micro-diodes espacées permet d'obtenir une grande surface de détection pour des valeurs de capacité et de courant de fuite très basses.

De plus, chaque voie de circuit analogique de discrimination et de traitement 11 est avantageusement constitué par un amplificateur de charge 16 recevant les signaux délivrés par une partie correspondante 10' de la structure de détection 10, préférentiellement sous forme d'une matrice de micro-diodes, et suivi d'un étage de filtrage de bruit 17, par exemple du type filtre passe-bande, les signaux analogiques amplifiés et filtrés étant appliqués à l'entrée d'un circuit comparateur 18, éventuellement à travers un étage tampon 19, ledit circuit 18 réalisant une discrimination et une numérisation des signaux analogiques précités.

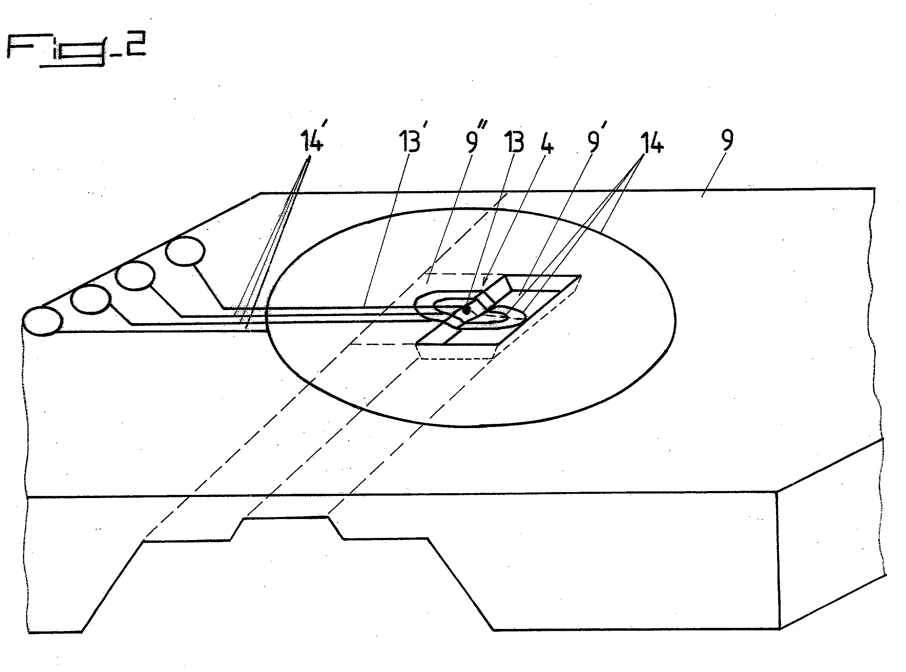

Conformément à une première variante de réalisation de l'invention (figures 2 à 5), la structure de détection 10 est composée de quatre matrices 10' de micro-diodes 15 associées chacune à une moitié d'une des deux zones d'absorption sélective 9' et 9" du moyen calibré de filtrage sélectif 9 définissant les deux plages de détection.

Dans ce cas, ledit dosimètre pourra comporter deux moyens de comptage 12 distincts dont l'un est alimenté en signaux discriminés provenant des deux matrices 10' associées à l'une des deux zones d'absorption sélective 9' ou 9" et dont l'autre est alimentée en signaux discriminés provenant respectivement d'une matrice 10' associé à l'une des moitiés d'une des deux zones d'absorption sélective 9' ou 9" et d'une matrice associé à l'une des moitiés de l'autre desdites deux zones 9" ou 9'.

En relation avec cette première variante de réalisation, chaque moyen de comptage différencié 12 consiste préférentiellement en un compteur numérique 20 précédé d'une porte OU 21 dont les deux entrées reçoivent les impulsions logiques délivrées par deux circuits analogiques de traitement et de discrimination 11 associés chacun à une partie 10' correspondante distincte de la structure de détection 10.

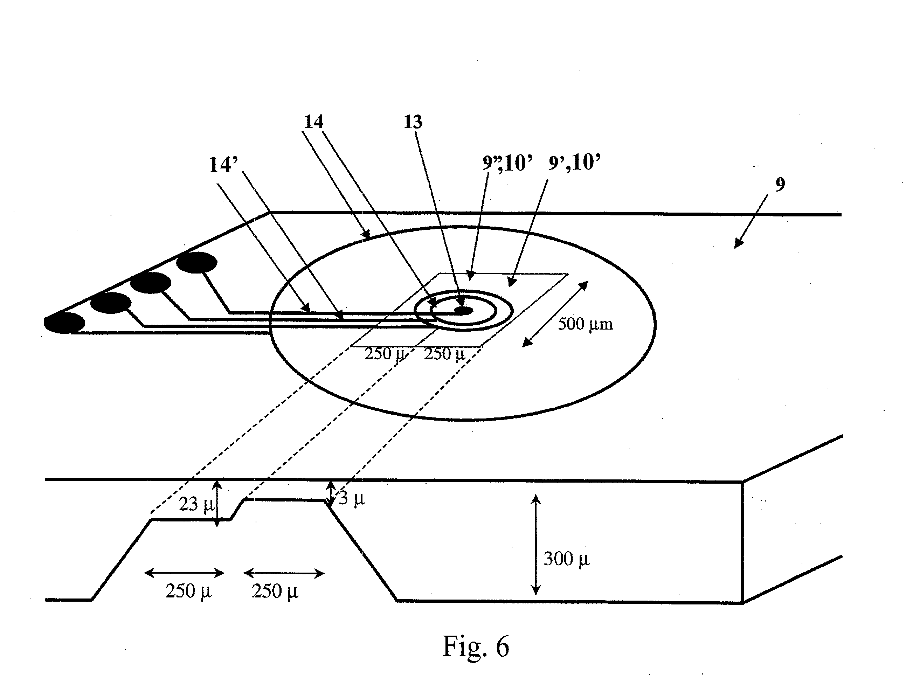

Conformément à une seconde variante de réalisation préférée de l'invention (figures 6 à 8), la structure de détection 10 est composée de deux matrices 10' de micro-diodes 15 associées chacune à l'une des deux zones d'absorption sélective 9' et 9" du moyen calibré de filtrage sélectif 9 définissant les deux plages de détection.

Dans ce cas, ledit dosimètre pourra comporter deux moyens de comptage 12 distincts dont l'un est alimenté en signaux provenant de la matrice 10' associée à l'une des deux zones d'absorption sélective 9' ou 9" et dont l'autre est alimentée en signaux provenant de la matrice 10' associé à l'autre des deux zones d'absorption sélective 9' ou 9".

En relation avec cette seconde variante de réalisation, chaque moyen de comptage différencié 12 consiste préférentiellement en un compteur numérique 20 dont l'entrée reçoit les impulsions logiques délivrées par le circuit analogique de traitement et de discrimination 11 associé à sa partie ou matrice 10' correspondante de la structure de détection 10.

Dans les deux variantes précitées, pour que la mesure effectuée au moyen du dosimètre soit valide, il faut que les résultats affichés par les deux moyens de comptage 12 vérifient la relation donnée par la théorie physique correspondante.

En vue de simplifier la fabrication et la maintenance du dosimètre et de réduire l'encombrement total des circuits électroniques intégrés dans ce dernier, il peut être avantageusement prévu que la structure de détection 10, les circuits analogiques de traitement et de discrimination 11 et les moyens de comptage différencié 12 soient intégrés dans un unique composant 22.

Selon une autre caractéristique de l'invention, le dosimètre peut, en outre, comporter des moyens d'affichage 23 des valeurs délivrées par les deux moyens de comptage différencié 12, ces moyens d'affichage 23 étant préférentiellement fixés sur l'une des faces extérieures du boîtier 1 ou montés de manière affleurante sur l'une de ces dernières.

Préférentiellement, le boîtier 1 présente une structure sensiblement parallélépipédique et renferme un moyen 24 d'alimentation autonome, éventuellement rechargeable, rendant ledit dosimètre portable.

L'invention sera décrite dans ce qui suit, sur la base d'un exemple de réalisation, de manière plus détaillée en relation avec les figures annexées.

L'invention dans une réalisation pratique avantageuse concernera plus particulièrement un dispositif de suivi dosimétrique en temps réel du radon, au moyen d'un appareillage aussi peu encombrant qu'un téléphone portable. Il est représenté de manière schématique, selon deux variantes de réalisation, sur les figures 1 à 8 annexées.

Il s'agit essentiellement d'un collecteur électrostatique optimisé qui sélectionne ensuite deux énergies (particules $\alpha$) de la chaîne radioactive $^{222}$Radon ; la mesure est réalisée par un circuit intégré spécifique (détecteur + traitement).

Pour chaque mesure, le volume de collection est ensuite soumis à un champ électrique adéquat pour collecter les ions positifs vers une micro-cathode 13 de très petites dimensions. Face à la micro-cathode, un circuit intégré 22 en technologie mixte (analogique + digital) pour détecter les particules alpha et des absorbeurs 9' et 9" de mylar ou de silicium d'épaisseur calibrée pour discriminer les différentes énergies utiles.

Le circuit intégré 22 est constitué d'une ou de plusieurs matrices 10 de micro-diodes 15, le signal étant lu par une chaîne [amplificateur + discriminateur + compteur numérique].

Ainsi, le dosimètre selon l'invention est principalement constitué par les éléments suivants :

1) un boîtier 1 de conditionnement, avec, comme éléments apparents :

a) deux valves 5, 5' d'entrée/sortie d'air,
b) un écran 23 qui affiche les données de la mesure ;

2) une pile ou une batterie 24 ;
3) une feuille métallique 3 (plan d'anode), qui tapisse l'intérieur d'une des grandes parois du boîtier 1 ;
4) sur la face opposée à l'anode 3, à une distance d'environ 3 cm, un plan de séparation 7, par exemple en kapton (nom déposé) isolant, équipé d'une fenêtre 8 carrée de 1 à 2 cm$^2$ environ ;
5) sur ou dans la fenêtre 8 est collé un sélecteur 9 de particules alpha, sous la forme d'un plan de silicium aminci (figures 2 à 4, 6 et 7) (technologie de micro-usinage des MEMS) ou de portions de Mylar comportant deux plages d'épaisseurs calibrées 9' et 9", destinées à filtrer les énergies des particules alpha concernées par la mesure ;

6) le sélecteur de silicium 9 à deux épaisseurs est gravé par une technique de micro-lithographie et porte une micro-cathode 13 et ses structures de garde 14, 14', en aluminium très fin (0,1 micron), qui assure la collection électrostatique avec un champ optimal ;

7) un circuit intégré 22 spécifique, qui assure les fonctions de détection des particules alpha et du traitement électronique du signal, est situé sous le sélecteur de silicium 9 qui supporte la micro-cathode 13.

Les éléments 2) à 7) : sont montés dans le boîtier 1 hermétique et étanche aux radiations, en particulier aux énergies à mesurer.

On décrira à présent plus en détail les principaux éléments constitutifs du dosimètre dans le cadre d'une réalisation pratique de l'invention, ainsi que les principes de fonctionnement de cette dernière et les principes sur lesquels elle se fonde.

Ainsi, le sélecteur 9 d'énergies alpha est collé sur la fenêtre 8 découpée dans le plan de séparation isolant 7. Il remplit une double fonction : en plus de supporter les microstructures de collection (micro-cathode 13 + anneaux de garde 14), il réalise en même temps l'absorption sélective des particules alpha en fonction de leur énergie.

En effet, l'idée de base du dosimètre selon l'invention est de permettre la mesure résolue de deux des descendants du radon, et d'assurer ainsi la pertinence de la mesure en vérifiant à chaque instant qu'est réalisée la condition de l'équilibre séculaire.

A ce sujet, il convient de rappeler que le radon de l'air trouve son origine dans les éléments Uranium et Thorium de la croûte terrestre.

La chaîne de désintégration du Radon se présente comme suit :

$$^{222}Rn \rightarrow {}^{218}Po \rightarrow {}^{214}Pb \rightarrow {}^{214}Bi \rightarrow {}^{214}Po \rightarrow {}^{210}Pb$$

Les périodes radioactives respectives font qu'un volume d'air, une fois emprisonné, finit par contenir, au bout d'une centaine de minutes, une proportion égale de tous ces isotopes.

La première désintégration alpha d'un atome de $^{222}$Rn a lieu au hasard dans le volume : elle est presque impossible à détecter. Mais le premier élément fils est produit sous forme d'un ion positif multicharge $^{218}Po^{n+}$ : c'est cet ion-fils qui est collecté par le champ électrostatique régnant dans la chambre de collecte et amené jusqu'à la micro-cathode 13.

Les deux isotopes du Polonium (218 et 214) sont émetteurs alpha, et ce sont ces deux rayonnements que l'on se propose de détecter simultanément. La mesure, pour être valide, doit donner une proportion égale des deux composantes. Si cette proportion n'est pas égale, c'est pour des raisons d'absorption sélective de l'un des deux ions par les impuretés de l'échantillon d'air prélevé (poussières et humidité). Le circuit intégré 22 de traitement, discrimination et comptage fait la moyenne des deux mesures effectuées séparément pour s'affranchir de ce problème.

Le circuit électronique intégré 22 utilisé dans le cadre du dosimètre selon l'invention comporte, pour la partie "capteur", un élément notablement différent d'une diode classique (à barrière de surface), ne permettant pas une mesure directe des énergies des deux rayonnements alpha visés.

Pour des raisons de simplicité de conception, le circuit 12 utilisé ne fait que du comptage et la fonction de discrimination des énergies est réalisée par une technique d'absorption sélective grâce à des épaisseurs de matériau absorbant parfaitement calibrées.

Les deux isotopes précités émettent respectivement des alphas d'énergie 6 MeV (isotope 218) et 7,68 MeV.

Pour la réalisation du sélecteur, les processus d'amincissement par voie chimique sont bien connus de l'homme du métier et courants dans l'industrie du silicium, les galettes pouvant être amenées de 300 microns à quelques microns seulement en fonction des besoins.

Tout matériau isolant pourrait convenir à cette application d'absorption sélective, mais l'utilisation du silicium pour le sélecteur d'énergie 9 permet de profiter de la standardisation de ce processus dans cette industrie, et de disposer de contacts électriques faciles d'accès (soudures). La plaquette de silicium 9 est oxydée en surface (isolant).

Une mesure de dosimétrie quantitative (évaluation de l'énergie alphapotentielle) exige une discrimination en énergie, réalisée en interceptant les trajectoires des particules alpha par des épaisseurs de matière calibrées au μm près. Ainsi, une épaisseur de 23 μm de silicium (ajoutée aux 5 μm de SiO2 du circuit 22) suffit pour bloquer complètement l'isotope d'énergie 6 MeV.

L'attaque chimique du plan de silicium (en surface et/ou en sous face), faite avantageusement avec une technologie du type dénommé MEMS (MicroMachines), définit alors deux plages de même surface (par exemple 500 x 250 microns), à savoir (figures 2, 4 et 6, 7) :

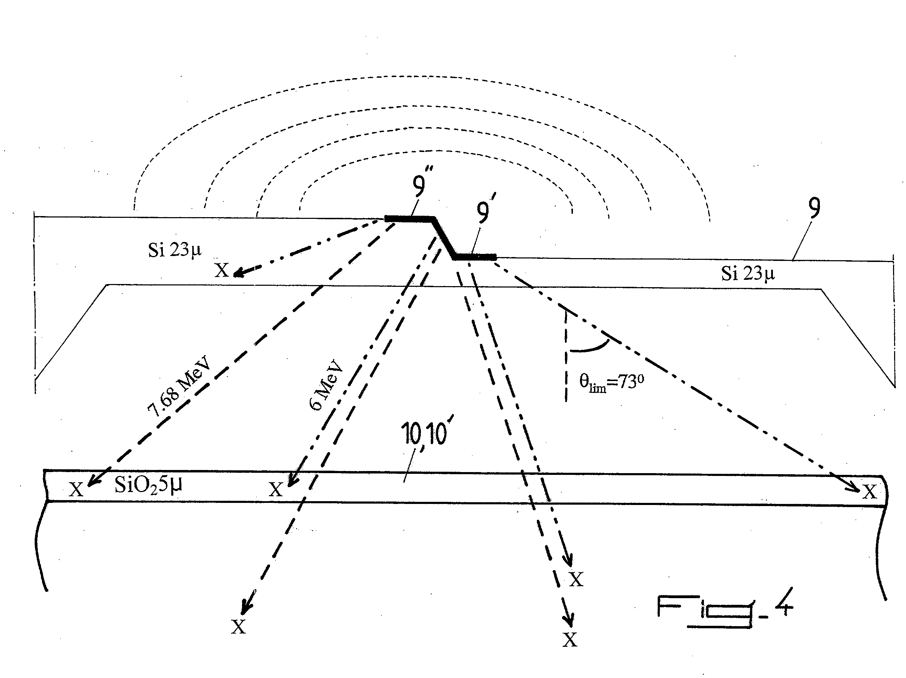

- une zone 9' d'épaisseur 23 microns, bloque les 6 MeV à tous les angles,
- une zone 9" d'épaisseur minimale (typiquement 3 microns), qui laisse passer les deux isotopes jusqu'à des angles de plus de 60° (voir figure 4).

Cette stratégie peut être supportée par des calculs de simulation détaillée à l'aide d'outils informatiques adaptés, permettant une évaluation quantitative de l'efficacité absolue de détection pour une géométrie donnée.

Un des points importants à résoudre dans la pratique concerne la collection électrostatique.

En effet, il s'agit de mettre en oeuvre un champ électrique suffisamment intense pour assurer la collecte la plus efficace possible des ions positifs, sans pour autant utiliser de trop hautes tensions (pour des raisons de sécurité de l'utilisateur et de contrainte d'alimentation).

La source de particules $\alpha$ est la micro-cathode 13, gravée par une technique de micro-lithographie courante, qui permet de dessiner des structures dont la taille typique est 100 microns.

Une micro-cathode 13 circulaire de 50 microns de diamètre (tension $V_c$ = -50 V), mise en regard (à environ 3 cm) du plan d'anode ($V_a$ = 0), , génère localement un champ très élevé (supérieur à 1kV / cm), ce qui est suffisant pour l'application envisagée (au-delà de 10 kV / cm, des phénomènes de claquage risquent de se produire). Le fort champ nécessaire est donc simplement obtenu par miniaturisation de la cathode 4.

Cependant, la piste d'alimentation 13' de la micro-cathode 13 doit être prise en compte comme élément perturbateur : également au potentiel de -50V, cette structure pourrait détruire à elle seule la configuration du champ (symétrie cylindrique et surtout : haute valeur localement).

La micro-cathode 13 est avantageusement en aluminium, de forme circulaire, avec un rayon de 50 microns ("source" radioactive artificielle). Les anneaux de garde 14 sont circulaires, concentriques, les centres coïncident avec le centre la cathode, et les anneaux doivent éviter le contact avec les pistes d'alimentation 13'.

Le rayon du premier anneau est avantageusement égal à deux fois la rayon de la micro-cathode 13, soit 100 microns si la cathode fait 50 microns. C'est ce premier anneau de garde (polarisé à -40V dans le présent exemple) qui force le champ cathodique à la valeur réciproque théorique calculée si la micro-cathode circulaire existait seule, sans sa piste d'alimentation.

Les anneaux 14 supplémentaires servent à écranter le champ sur une encore plus grande surface : les rayons et polarités (-30, -20, -10 et 0 V) doivent respecter la relation de champ théorique cylindrique. Les différentes pistes d'alimentation 13' et 14' rejoignent, sur le même bord, leurs plots de soudure respectifs (voir figures 2 et 6).

L'utilisation, par exemple, de silicium d'orientation cristallographique <111> pour le sélecteur 9 autorise des "marches" de plusieurs microns de hauteur (ici 20) avec des plans d'attaque de bord à 45°.

La micro-cathode 13 précitée joue donc le rôle de source de particules $\alpha$. Statistiquement, la moitié d'entre elles est émise vers le plan d'anode 3 (invisible pour le dosimètre) et l'autre moitié vers le détecteur [9, 10, 11, 12]. Ces dernières franchissent alors le sélecteur d'énergies 9 et pénètrent dans la structure de détection 10 proprement dite.

Le circuit intégré 22 situé sous le sélecteur 9 présente en fait trois parties fonctionnelles distinctes, à savoir, une partie détecteur, une partie analogique de traitement et de discrimination et une partie numérique de comptage.

Le détecteur de particules $\alpha$ pourrait être une diode PIN ou à barrière de surface, dispositifs bien connus, avec leurs avantages (mesure de l'énergie) et leurs défauts : bruit et capacité proportionnels à la surface, pas de possibilité d'intégration directe à l'électronique.

A la place de la barrière de surface, l'invention préconise une structure de 32 x 32 micro-diodes P+N (3 x 3 microns) sur silicium épitaxial de type N, analogues à celles décrites dans la publication J.D. Berst, D. Husson et al., "A Monolithic Active Pixel Sensor for Charged Particle tracking using standard CMOS technology" (Un capteur monolithique actif à pixels pour le dépistage de particules chargées utilisant une technologie CMOS standard), Nuclear Instruments and Methods, A458 (2001)677. Les micro-diodes 15 ne sont pas polarisées au sens classique (elles sont au potentiel des amplis), et la collection de charge se fait par pure diffusion. Les simulations des inventeurs ont montré que la charge est collectée en moins de 100 ns (nanosecondes) pour une distance optimale de 80 microns.

Les micro-diodes 15 sont espacées de 80 microns, et sont toutes connectées entre elles par un réseau de pistes d'aluminium tracées sur l'oxyde. L'ensemble fait ainsi une surface de 2,4 x 2,4 mm. Chaque matrice 10' répond donc comme une seule diode de grande surface, avec le double avantage d'un faible courant de fuite et d'une capacité réduite: avec 10fF (femto-Farads) par diode, l'ensemble n'atteint pas 10pF (pico-Farads), capacité standard pour les amplificateurs de charge intégrés.

Sur le même substrat que les micro-diodes 15 précitées, on intègre directement la chaîne analogique, puis numérique.

Le circuit de traitement 11 comprend un amplificateur de charge 16 de structure classique, avec la boucle de rétroaction et un système de miroirs de courant pour l'alimentation. Cette structure conventionnelle (dite "single ended folded-cascode") est appréciée pour son gain DC élevé et sa grande largeur de bande.

Un possible schéma d'un tel amplificateur 16 ressort notamment du document de Y. Hu et E. Nygaard, "A new design of a low noise, low power CMOS charge amplifier" (Un nouveau schéma d'un amplificateur de charge CMOS faible puissance et à faible bruit), Nuclear Instruments and Methods, A365(1995)193.

Pour la présente application précise, le signal à détecter ($Q \sim 10^6$ électrons ou 200 fC) est notablement plus fort que pour des particules relativistes ou des photons X : le gain peut rester modeste, au taux de comptage de l'ordre de 100 kHz. Par contre, une consommation aussi faible que possible (< 0,5 mW) est recherchée.

L'optimisation du bruit ne présente donc pas de difficulté particulière, mais il est habituel de filtrer le bruit par un étage additionnel : un filtre CR-RC. Ce rôle est joué par un amplificateur de mise en forme 17. Ce filtre passe-bande semi-gaussien a pour fonction essentielle de limiter la bande-passante et donc le bruit total. Un bon ordre de grandeur pour le gain total est 5 à 10 mV/Fc.

L'étage suivant de la chaîne ou du circuit analogique 11 consiste en un discriminateur 18 (circuit comparateur) et a pour fonction essentielle de rejeter les évènements parasites (gamma ou beta) ou même les évènements $\alpha$ qui ne seraient détectés qu'en bordure de matrice 10'. Ce circuit répond par 1 pour un "bon" événement et par 0 dans le cas contraire. L'entrée du discriminateur 18 est éventuellement précédé par un étage tampon 19 (simple suiveur à la sortie de l'amplificateur 17 suivi d'un filtre RC) pour assurer un niveau zéro de décalage à l'entrée du discriminateur 18. Au vu de l'importance du signal de charge, le problème bien connu des dispersions de seuils (fonction de la technologie employée) devrait être complètement maîtrisé.

Chaque matrice 10' de micro-diodes 15 (formant des quasi-pixels) et sa chaîne consécutive de traitement, discrimination et comptage constitue une voie hybride analogique-numérique, destinée à la lecture d'une plage ou zone de détection. Le circuit 22 complet comporte donc quatre voies analogiques-numériques identiques (première variante des figures 2 à 5) ou deux voies analogiques-numériques identiques (seconde variante des figures 6 à 8).

Dans la première variante de réalisation, chaque comparateur/discriminateur 18 génère donc des impulsions logiques, mais les quatre matrices 10' (par exemple dénommées A, B, C, D et disposées en deux colonnes et deux rangées) fonctionnant en redondance et complémentarité, le circuit intégré 22 ne comporte que deux compteurs 20. Les sorties des chaînes analogiques des plages ou matrices A et C (montées en diagonale) sont soumises à une fonction OU 21, avant d'attaquer le compteur "somme" (décompte des deux énergies d'alphas autorisées). De même, les deux chaînes analogiques correspondant aux plages ou matrices B et C passent une porte OU 21, puis adressent le second compteur "singulier" (décompte d'un seul type d'alphas).

Dans la seconde variante de réalisation, chaque comparateur/discriminateur 18 génère donc des impulsions logiques et les deux matrices 10' fonctionnent en redondance et complémentarité, le circuit intégré 22 ne comportant que deux compteurs 20.

Un premier compteur 20, dénommé "solo", ne décomptera qu'une énergie d'alphas, alors que le second compteur 20, dénommé "duo", décomptera les deux énergies.

Au vu des faibles taux de comptage escomptés, des compteurs 8-bits (par exemple composés de deux compteurs de base 4-bits) sont généralement suffisants.

Toutefois, une version surdimensionnée du dosimètre, pour une utilisation dans un environnement très radioactif, pourrait comporter des compteurs 10 bits.

En fonctionnement normal (équilibre séculaire atteint, taux d'humidité bas), le compteur "singulier" ou "solo" affiche la moitié de la valeur du compteur "somme" ou "duo" : la mesure est alors valide. Pour calculer la dose intégrée par l'homme (énergie alphapotentielle), on prend cette dernière valeur multipliée par quatre : un facteur 2 pour le demi-angle solide de détection et un facteur 2 pour les deux isotopes alpha qui échappent à la mesure.

Grâce à l'invention, il est donc possible de proposer un dispositif pour mesurer en continu la concentration en un composé radioactif, plus particulièrement le radon, dans un mélange de gaz, notamment l'atmosphère, sous la forme d'un appareil simple, léger, autonome, d'un prix de revient très modéré et dont la manipulation n'entraîne aucun risque pour l'utilisateur (basse tension).

Ce dispositif réalise, en particulier pour le radon, des mesures fiables et de grande précision, puisque les deux ou quatre plages ou zones du sélecteur par absorption 9 sélectionnent sans ambiguïté deux raies alpha de la chaîne de désintégration du radon et qu'il est possible de vérifier en permanence la condition d'équilibre séculaire garantie d'une mesure précise, exprimable dès lors en énergie alphapotentielle, qui est la plus pertinente pour la dose reçue par l'homme.

En relation avec la réalisation préférentielle des moyens de détection, traitement, discrimination et éventuellement comptage, notamment sous la forme d'un circuit intégré unique 22, on aboutit en outre aux avantages suivants :

i) Grande efficacité grâce à la grande surface de détection en regard de la micro-cathode 13,
ii) Bruit électronique faible : capacité et courant de fuite très faibles,
iii) Pureté du signal : des micro-diodes 15 sur un substrat très fin (silicium épitaxial) offrent une insensibilité naturelle aux photons gamma et un discriminateur à seuils permet d'éliminer les signaux beta,
iv) Gamme dynamique : taux de comptage du Hz (à 400 Bq/m3) aux centaines de kHz.

Le dispositif selon l'invention peut être utilisé pour des mesures ponctuelles ou des mesures en continu.

Il présente par rapport aux dispositifs passifs mentionnés en introduction, un suivi opérationnel (i.e. immédiat) du niveau de radioactivité alpha, et la simplicité, sans préparation complexe et sans la procédure finale de développement et de lecture. Il permet de donner des indications pour mesurer en continu l'évolution temporelle de l'activité volumique du radon en atmosphère libre ou confinée.

Par rapport aux dispositifs électroniques sur le marché, il peut offrir en version commerciale les avantages suivants : coût divisé par environ 10, efficacité réelle de 100 %, poids divisé par environ 10 et absence de haute tension.

Le dispositif selon l'invention consiste donc en un dosimètre léger, autonome, sans danger, facile d'utilisation et dont le coût reste modeste.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de mesure du type dosimètre électronique pour la mesure de la teneur en un composé radioactif de l'air, d'un mélange de gaz ou analogue, en particulier en radon, dosimètre essentiellement constitué par un boîtier comprenant, d'une part, une chambre de collecte hermétique pourvue d'une anode et d'une cathode et munie de moyens d'introduction et d'évacuation du gaz ou mélange de gaz à analyser et, d'autre part, un compartiment technique renfermant les moyens de détection, de traitement du signal de détection et d'alimentation, dosimètre **caractérisé en ce que** la chambre de collecte (2) et le compartiment technique (6) sont séparés par une paroi isolante (7) comportant une fenêtre (8) dans laquelle est monté un moyen calibré de filtrage sélectif (9) des particules alpha générés par le composé radioactif contenu dans le volume de gaz à analyser présent dans la chambre de collecte (2), comportant au moins deux plages de sélection, associé, du côté chambre de collecte (2), à un dispositif de cathode (4) et coopérant, du côté compartiment technique (6), avec une structure de détection (10) partitionnée associée à au moins deux voies ou circuits (11) de traitement et de discrimination des signaux de détection et à des moyens (12) de comptage différencié d'au moins deux types de particules alpha.

2. Dosimètre selon la revendication 1, **caractérisé en ce que** le moyen calibré de filtrage sélectif (9) réalise une absorption sélective de deux types de particules alpha et consiste en un sélecteur de particules alpha sous la forme d'une plaquette ou d'une portion de feuille sur laquelle sont définies deux zones (9' et 9") d'épaisseurs calibrées différentes, de même surface, ajustées pour filtrer les énergies de deux types de particules alpha, préférentiellement deux types liés quantitativement par une relation de proportionnalité ou analogue, et situées en regard de la structure de détection (10) sous-jacente audit sélecteur (9).

3. Dosimètre selon la revendication 2, **caractérisé en ce que** le matériau formant le sélecteur (9) de particules alpha est choisi dans le groupe formé par les matériaux semi-conducteurs, en particulier le silicium et les matériaux polymères.

4. Dosimètre selon l'une quelconque des revendications 1 à 3, **caractérisé en ce que** le dispositif de cathode (4) comprend une cathode de très faible taille sous la forme d'une micro-cathode (13) entourée d'une ou de plusieurs structures de garde (14, 14') et est rapporté directement sur le moyen calibré de filtrage sélectif (9), l'anode (3) étant rapportée sur la face intérieure de la paroi du boîtier (1) opposée à la paroi de séparation (7) isolante, cette dernière étant étanche au rayonnement alpha et montée hermétiquement dans ledit boîtier (1) et ladite anode (3) étant située à faible distance de ladite micro-cathode (13).

5. Dosimètre selon les revendications 2 et 4, **caractérisé en ce que** la micro-cathode (13) présente une forme circulaire et est rapportée, préférentiellement par dépôt de matériau conducteur par l'intermédiaire d'une technique de micro-lithographie, directement sur la face correspondante, rendue isolante, de la plaquette ou portion de feuille formant sélecteur (9) et symétriquement à cheval sur les deux zones (9' et 9") d'épaisseurs calibrées différentes coopérant avec la structure de détection (10), les structures de garde consistant en au moins deux pistes annulaires (14) entourant concentriquement ladite micro-cathode (13) et en leurs pistes d'alimentation (14') entourant la piste d'alimentation (13') de ladite micro-cathode (13).

6. Dosimètre selon l'une quelconque des revendications 2 à 5, **caractérisé en ce que** la structure de détection (10) consiste en au moins deux matrices (10') de micro-diodes (15) s'étendant chacune sous l'une des deux zones d'absorption sélective (9' et 9"), ou sous une partie de l'une de ces dernières, lesdites micro-diodes (15) étant disposées selon un motif régulier et chaque matrice (10') étant reliée à une voie de circuit analogique (11) de discrimination et de traitement des signaux de détection fournis par ses micro-diodes (15) constitutives.

7. Dosimètre selon l'une quelconque des revendications 1 à 6, **caractérisé en ce que** chaque voie de circuit analogique de discrimination et de traitement (11) est constitué par un amplificateur de charge (16) recevant les signaux délivrés par une partie correspondante (10') de la structure de détection (10), préférentiellement sous forme d'une matrice de micro-diodes, et suivi d'un étage de filtrage de bruit (17), par exemple du type filtre passe-bande, les signaux analogiques amplifiés et filtrés étant appliqués à l'entrée d'un circuit comparateur (18), éventuellement à travers un étage tampon (19), ledit circuit (18) réalisant une discrimination et une numérisation des signaux analogiques précités.

**8.** Dosimètre selon l'une quelconque des revendications 1 à 7, **caractérisé en ce que** chaque moyen de comptage différencié (12) consiste en un compteur numérique (20) précédé d'une porte OU (21) dont les deux entrées reçoivent les impulsions logiques délivrées par deux voies ou circuits analogiques de traitement et de discrimination (11) associés chacun à une partie (10') correspondante distincte de la structure de détection (10).

**9.** Dosimètre selon la revendication 8 et l'une quelconque des revendications 6 et 7, **caractérisé en ce que** la structure de détection (10) est composée de quatre matrices (10') de micro-diodes (15) associées chacune à une moitié d'une des deux zones d'absorption sélective (9' et 9") du moyen calibré de filtrage sélectif (9) définissant les deux plages de détection et **en ce que** ledit dosimètre comporte deux moyens de comptage (12) distincts dont l'un est alimenté en signaux discriminés provenant des deux matrices (10') associées à l'une des deux zones d'absorption sélective (9' ou 9") et dont l'autre est alimentée en signaux discriminés provenant respectivement d'une matrice (10') associé à l'une des moitiés d'une des deux zones d'absorption sélective (9' ou 9") et d'une matrice associée à l'une des moitiés de l'autre desdites deux zones (9" ou 9').

**10.** Dosimètre selon l'une quelconque des revendications 1 à 7, **caractérisé en ce que** chaque moyen de comptage différencié (12) consiste en un compteur numérique (20) dont l'entrée reçoit les impulsions logiques délivrées par le circuit analogique de traitement et de discrimination (11) associé à sa partie ou matrice (10') correspondante de la structure de détection.

**11.** Dosimètre selon la revendication 10 et l'une quelconque des revendications 6 et 7, **caractérisé en ce que** la structure de détection (10) est composée de deux matrices (10') de micro-diodes (15) associées chacune à l'une des deux zones d'absorption sélective (9') et (9") du moyen calibré de filtrage sélectif (9) définissant les deux plages de détection et **en ce que** le dosimètre comporte deux moyens de comptage (12) distincts dont l'un est alimenté en signaux provenant de la matrice (10') associée à l'une des deux zones d'absorption sélective (9' ou 9") et dont l'autre est alimentée en signaux provenant de la matrice (10') associé à l'autre des deux zones d'absorption sélective (9' ou 9").

**12.** Dosimètre selon l'une quelconque des revendications 1 à 11, **caractérisé en ce que** la structure de détection (10), les circuits analogiques de traitement et de discrimination (11) et les moyens de comptage différencié (12) sont intégrés dans un unique composant (22).

**13.** Dosimètre selon l'une quelconque des revendications 1 à 12, **caractérisé en ce qu'**il comporte des moyens d'affichage (23) des valeurs délivrées par les deux moyens de comptage différencié (12), ces moyens d'affichage (23) étant préférentiellement fixés sur l'une des faces extérieures du boîtier (1) ou montés de manière affleurante sur l'une de ces dernières.

**14.** Dosimètre selon l'une quelconque des revendications 1 à 13, **caractérisé en ce que** le boîtier (1) présente une structure sensiblement parallélépipédique et renferme un moyen (24) d'alimentation autonome, rendant ledit dosimètre portable.

Fig. 1

EP 1 416 295 A1

Fig.2

14′  13′  9″  13  4  9′  14  9

EP 1 416 295 A1

Fig-3

12

Si 23μ

9″   9′   9

Si 23μ

X

$\theta_{lim}=73^{0}$

7.68 MeV

6 MeV

10,10′

X   SiO$_2$5μ   X   X

X

X

X

Fig.4

EP 1 416 295 A1

VOIE C

SOMME

VOIE A

Fig. 5

11  18

21

20

12

19

16

17

10(A)

15

Fig. 6

Fig. 7

Fig. 8

| | Office européen | | Numéro de la demande |
|---|---|---|---|
| | des brevets | **RAPPORT DE RECHERCHE EUROPEENNE** | EP 02 36 0302 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 489 780 A (DIAMONDIS PETER J) 6 février 1996 (1996-02-06) * abrégé; figures 1,3 * | 1 | G01T1/178 G01T1/02 |
| A | DE 43 07 015 A (MATTHIES DIETMAR DR) 8 septembre 1994 (1994-09-08) * revendications 1,12; figure 1 * | 1 | |
| A | US 4 983 843 A (THOMSON IAN) 8 janvier 1991 (1991-01-08) * colonne 9, ligne 31 - ligne 51; figure 7 * | 1 | |
| A | US 4 975 574 A (LUCAS HENRY) 4 décembre 1990 (1990-12-04) * abrégé; figures 1,2 * | 1 | |
| | | | **DOMAINES TECHNIQUES RECHERCHES (Int.Cl.7)** |
| | | | G01T |

Le présent rapport a été établi pour toutes les revendications

| Lieu de la recherche | Date d'achèvement de la recherche | Examinateur |
|---|---|---|
| LA HAYE | 8 avril 2003 | Anderson, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 36 0302

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

08-04-2003

| Document brevet cité au rapport de recherche | | Date de publication | Membre(s) de la famille de brevet(s) | | Date de publication |
|---|---|---|---|---|---|
| US 5489780 | A | 06-02-1996 | CA | 2161924 A1 | 03-05-1996 |
| DE 4307015 | A | 08-09-1994 | DE | 4307015 A1 | 08-09-1994 |
| US 4983843 | A | 08-01-1991 | CA | 1293570 A1 | 24-12-1991 |
| US 4975574 | A | 04-12-1990 | CA | 2022403 A1 | 06-07-1991 |

EPO FORM P0460

Pour tout renseignement concernant cette annexe : voir Journal Officiel de l'Office européen des brevets, No.12/82